Europäisches Patentamt

European Patent Office

Office européen des brevets

(11) Publication number: **0 436 383 B1**

## EUROPEAN PATENT SPECIFICATION

(45) Date of publication of patent specification: **11.10.95**

(51) Int. Cl.6: **C08J 9/18**, C08K 5/02, C08L 25/02

(21) Application number: **90314289.1**

(22) Date of filing: **24.12.90**

(54) Process for the preparation of expandable vinyl aromatic polymer particles containing hexabromocyclododecane.

(30) Priority: **29.12.89 US 459171**

(43) Date of publication of application:
**10.07.91 Bulletin 91/28**

(45) Publication of the grant of the patent:
**11.10.95 Bulletin 95/41**

(84) Designated Contracting States:
**BE DE DK FR GB IT NL SE**

(56) References cited:
**AU-A- 547 069**
**DD-A- 142 193**

**DATABASE WPIL, accession no. 85-299664 [48], Derwent Publications Ltd, London,GB; & JP-A-60 206 845**

(73) Proprietor: **ARCO Chemical Technology, L.P. Two Greenville Crossing 4001 Kennett Pike, Suite 238 Greenville, Delaware 19807 (US)**

(72) Inventor: **Sonnenberg, Fred M. 50 Merbrook Lane Merion, Pennsylvania 19066 (US)**
Inventor: **Hajnik, Dennis M. 472 Scott Drive West Chester, Pennsylvania 19380 (US)**

(74) Representative: **Cropp, John Anthony David et al MATHYS & SOUIRE 100 Grays Inn Road London, WC1X 8AL (GB)**

**Description**

This invention pertains to methods for the preparation of fire-retardant expandable vinyl aromatic polymer beads which may be formed into molded foam products.

BACKGROUND OF THE INVENTION

Foamed thermoplastic polymers enjoy widespread use in building construction due to their low density and excellent heat insulating properties. For such uses, it is desirable that the foam be flame resistant and self-extinguishing in order to avoid any potential fire hazard. A variety of halogenated organic compounds, including hexabromocyclododecane, have been proposed as additives for this purpose.

Hexabromocyclododecane has been incorporated into foamed thermoplastics by several different methods. For example, Jpn. Kokai 63-215740 teaches that polystyrene and hexabromocyclododecane may be dry blended and then extruded with a volatile foaming agent. This method is not suitable for the preparation of expandable polystyrene beads, however.

U.S. Pat. No. 4,761,432 teaches a method of coating seed beads of polystyrene with hexabromocyclododecane wherein emulsion polymerization of a vinyl aromatic monomer is carried out in the presence of the fire-retardant and the seed beads. Incorporation of the fire-retardant was to be much more effective using the coating method than when the fire-retardant was added with the foaming agent during impregnation (Example II).

Another method of preparing expandable polystyrene beads containing hexabromocyclododecane is to polymerize styrene monomer in an aqueous suspension containing foaming agent and the fire-retardant, as illustrated by U.S. Pat. Nos. 3,093,599, 3,956,203, 3,503,905 and 4,281,067. While such procedures are effective and require a minimum number of processing steps, the presence of the hexabromocyclododecane during polymerization may possibly result in undesired changes in the molecular weight of the polystyrene produced due to chain termination or transfer reactions.

U.S. pat. No. 3,093,599 teaches that polystyrene beads preimpregnated with a volatile hydrocarbon foaming agent may be rendered fire-retardant by coating the beads with hexabromocyclododecane using an adhesive agent such as paraffin wax. Such methods require a separate impregnation step and do not yield beads having the hexabromocyclododecane physically incorporated within the polymer. In addition, the coating may interfere with the desired expansion and fusion of the beads upon molding.

U.S. Pat. No. 4,520,136 describes an impregnation method whereby polystyrene beads and hexabromocyclododecane are suspended in water and heated to incorporate a volatile hydrocarbon blowing agent. Unless pentaerythritol tetrastearate is also present, however, foams prepared from the resulting impregnated beads have poor flame resistance.

AU-A-547 069, which describes a method for increasing the pre-foaming rate of expandable vinyl aromatic polymer beads by introducing certain organic liquids as accelerator compounds, teaches modifying the flammability characteristics of the eventually foamed product by the addition of brominated compounds including hexabromocyclodecane. The compound is added to a suspension of the beads in water together with the blowing agent and accelerator and the suspension is then heated for several hours.

It is clear there is a need for an improved method of incorporating hexabromocyclododecane into expandable vinyl aromatic polymer beads whereby molded foam articles prepared from the impregnated beads may be effectively rendered flame resistant.

SUMMARY OF THE INVENTION

This invention provides a method for preparing fire-retardant expandable thermoplastic beads comprising forming an aqueous suspension of 100 parts by weight vinyl aromatic polymer particles, from 50 to 500 parts by weight water, an effective amount of a suspending agent, from 0.1 to 2.5 parts by weight of hexabromocyclododecane having an average particle diameter of less than 25 microns, and from 3 to 20 parts by weight of a $C_4$-$C_6$ aliphatic hydrocarbon foaming agent. The aqueous suspension is heated at a temperature of from 40°C to 140°C for a period of from 0.5 to 15 hours to incorporate the hexabromocyclododecane and the foaming agent into the polymer particles and to form fire-retardant expandable thermoplastic beads, which are then separated from the water. This process yields expandable thermoplastic beads which can be readily formed into molded foam articles having excellent physical and fire-retardant properties.

2

## DETAILED DESCRIPTION OF THE INVENTION

The vinyl aromatic polymer particles suitable for use in the process of this invention may be spherical or irregularly shaped particles of any of the thermoplastic vinyl aromatic polymers usable in the preparation of molded foam articles. Although homopolymers or copolymers of any vinyl aromatic monomer may be employed, styrene and substituted styrene monomers are preferred. Examples of suitable vinyl aromatic monomers include, but are not limited to, styrene, $\alpha$-methyl styrene, ar-methyl styrene, ar-ethyl styrene, ar-isopropyl styrene, ar-tert-butyl styrene, vinyl toluene, vinyl xylene, ar-chlorostyrene, ar-chloromethylstyrene, vinyl naphthalene, and divinyl benzene. Minor amounts (i.e., up to about 50 mole percent) of other ethylenically unsaturated copolymerizable monomers may also be used, including, for example, butadiene, acrylic acid, methacrylic acid, maleic anhydride, methyl methacrylate, and acrylonitrile. The vinyl aromatic polymer may be rubber modified with an elastomer such as polybutadiene or styrene/butadiene block or random copolymers. The vinyl aromatic polymer particles should preferably be from 0.1 to 2 mm in average diameter. Methods of obtaining suitable particles such as suspension polymerization or pelletization are well known in the art.

The hexabromocyclododecane to be used as the fire-retardant agent in the process of this invention con be any of the hexabrominated derivatives of cyclododecatriene. Any of the isomers of hexabromocyclododecane are suitable for use. Mixtures of different isomers of hexabromocyclododecane can also be employed. The average particle size of the hexabromocyclododecane should in any case, however, be less than 25 microns. Average particle size may be readily determined by means of electron microscopy. Hexabromocyclododecane is available commercially from Ameribrom, Inc., Ethyl Corp. ("SAYTEX HBCD"), and Great Lakes Chemical Corp. ("CD-75P"). Micronized hexabromocyclododecane may be obtained by grinding or milling coarser grades of hexabromocyclododecane or by any other suitable method.

To render the vinyl aromatic polymer particles effectively fire-retardant, from 0.1 to 2.5 parts by weight of the micronized hexabromocyclododecane per 100 parts by weight of the particles is preferably present in the aqueous suspension. Most preferably, the level of hexabromocyclododecane is from 0.5 to 1.5 parts per weight per 100 parts by weight of the particles.

Generally speaking, at least 70 percent of the micronized hexabromocyclododecane charged to the aqueous suspension is typically incorporated into the thermoplastic polymer particles using the process of this invention. When a coarse grade of hexabromocyclododecane is employed in the impregnation, bromine levels in the treated beads are much lower than if micronized hexabromocyclododecane is used. The flame resistance of molded articles produced using such beads is considerably less than that of foam articles prepared using beads treated with micronized hexabromocyclododecane.

An additional advantage of the process of this invention is that the amount of hexabromocyclododecane which remains in the aqueous phase after impregnation is minimal. Thus, waste water treatment costs are lower and less hexabromocyclododecane is needed to obtain a desired level of fire-retardant in the beads than when coarse grades of hexabromocyclododecane are used.

Suitable $C_4$-$C_6$ aliphatic hydrocarbon foaming agents include n-butane, isobutane, n-pentane, isopentane, n-hexane, 2-methyl pentane, 3-methyl pentane, cyclohexane, cyclopentane, and cyclobutane. Mixtures of such foaming agents may also be employed. The use of $C_5$ aliphatic hydrocarbons, especially n-pentane, isopentane, cyclopentane or mixtures thereof is preferred. Although from 3 to 20 parts by weight foaming agent per 100 parts by weight vinyl aromatic polymer particles may be used, the preferred amount is from 5 to 12 parts foaming agent.

The components described above are suspended in from 50 to 500 parts (preferably, 75 to 250 parts) by weight water per 100 parts by weight of the particles using an effective amount of one or more suitable suspending agents. Any of the suspending agents useful in the suspension impregnation of vinyl aromatic polymer particles or the suspension polymerization of vinyl aromatic monomers may be used. Examples of suitable suspending agents include finely divided water-insoluble inorganic substances such as tricalcium phosphate, zinc oxide, bentonite, talc, kaolin, magnesium carbonate, and aluminum oxide as well as water-soluble polymers such as polyvinyl alcohol, partially hydrolyzed polyvinyl acetate, hydroxyethyl cellulose, polyacrylic acid, methyl cellulose, and polyvinyl pyrrolidone. An anionic surfactant extender such as a sodium linear alkylbenzene sulfonate (preferably, from 0.001 to 0.10 parts by weight per 100 parts by weight vinyl aromatic polymer particles) may also be employed. Such extenders are described, for example, in U.S. Pat. No. 2,673,194. The use of tricalcium phosphate together with a sodium linear alkylbenzene sulfonate is particularly preferred. The amount of the suspending agent necessary to form a stable suspension of the vinyl aromatic polymer particles in the water will vary depending on a number of factors, but will generally be from 0.1 to 5 parts by weight per 100 parts by weight of the vinyl aromatic polymer particles. One or more nonionic surfactants such as a polyoxyalkylene derivative of sorbitan monolaurate or other fatty acid ester or an ethylene oxide/propylene oxide block copolymer, can also be added to the aqueous suspension if desired. The preferred amount of nonionic surfactant is from 0.01 to 1 part by weight per 100 parts by weight vinyl aromatic polymer particles.

Depending upon the end use, molded foam articles containing higher amounts of hexabromocyclododecane will generally be self-extinguishing without the aid of synergists such as organic peroxide, azo, or ether compounds. At lower levels of hexabromocyclododecane, however, it is preferred to use from 0.01 to 2.0 parts by weight of an organic peroxide synergist per 100 parts by weight vinyl aromatic polymer particles. It is believed the synergist enhances the fire retardancy of the hexabromocyclododecane by lowering the molecular weight of the vinyl aromatic polymer as the foam burns. The synergist is preferably present in the aqueous suspension during impregnation. Organic peroxides having a half life of 1 hour or more at temperatures greater than 100°C are preferred for use as synergists. This limitation is necessary to prevent premature decomposition of the peroxide during the impregnation step. Illustrative examples of useful peroxide synergists include α,α'-bis(t-butyl-peroxy diisopropyl) benzene, dicumyl peroxide, di-tert-butyl peroxide, cumene hydroperoxide, t-butylperacetate, 2,5-dimethyl-2,5-di(tert-butyl peroxy)hexane, di(3-tert-butyl peroxy-1,3-dimethylbutyl) carbonate, benzoyl peroxide, and 2,5-dimethyl-2,5-di(tert-butyl peroxy)-3-hexyne.

If desired, other additives such as lubricants, dyes, colorants, acid scavengers, and anti-oxidants may also be added to the aqueous suspension. Such additives will be incorporated into the vinyl aromatic polymer particles during impregnation together with the hexabromocyclododecane and the foaming agent.

The aqueous suspension is heated, preferably while stirring or mixing, at a temperature of from 40°C to 140°C (preferably, from 80°C to 130°C) for a period of from 0.5 to 15 hours (preferably, from 1 to 5 hours) until the hexabromocyclododecane and the aliphatic hydrocarbon foaming agent are incorporated into the vinyl aromatic polymer particles. The temperature may advantageously be varied during this impregnation step.

Following impregnation, the fire-retardant expandable vinyl aromatic polymer beads are separated from the water using an appropriate method such as filtration, centrifugation, or decantation. The beads may be washed with additional water and then dried, if desired. If a suspending agent such as tricalcium phosphate is used, it may be desirable to first wash the beads with dilute acid (hydrochloric acid, for example) to remove the suspending agent.

The fire-retardant expandable vinyl aromatic polymer beads produced by the process of this invention may be readily shaped into molded foam articles by heating in molds which are not gas-tight when closed. The beads expand and fuse together to form the molded article. Prior to the final molding step, the beads preferably are pre-expanded. Such methods of preparing molded-bead foams are well-known and are described, for example, in Ingram et al "Polystyrene and Related Thermoplastic Foams" Plastic Foams, Marcel Dekker (1973), Part II, Chapter 10, pp. 531-581, Ingram "Expandable Polystyrene Processes" Addition and Condensation Polymerization Process American Chemical Society (1969), Chapter 33, pp. 531-535.

Molded foam articles prepared using the fire-retardant expandable vinyl aromatic beads of this invention are highly resistant to flame, even when relatively low levels of the hexabromocyclododecane are present. The hexabromocyclododecane is incorporated within the beads rather than coated on the surface of the beads and thus does not interfere with the fusion of the beads when they are expanded into molded foam articles. The density, tensile strength, heat resistance and other physical and mechanical properties of the foams are unaffected by the presence of the hexabromocyclododecane if the process of this invention is employed.

Without further elaboration, it is believed that one skilled in the art can, using the preceding description, utilize the present invention to its fullest extent. The following examples, therefore, are to be considered as merely illustrative and not limitative of the claims or remainder of the disclosure in any way whatsoever.

EXAMPLES-GENERAL

FOAMING METHOD:

Fire-retardant expandable polystyrene beads were prepared as described below, pre-expanded, and then molded by vacuum charging to a 50.8 x 203.2 mm (2" x 8") diameter preheated mold cavity. The beads were fused at about 115°C for 5-10 seconds in the mold; the resulting foam disc was then cooled by circulating water in the mold.

## VERTICAL TEST METHOD:

A number of 152.4 x 25.4 x 12.7 mm (6X1X1/2 inch) specimens were cut from each foam disc and conditioned at 60°C under vacuum for 16 hours. Each specimen was hung lengthwise from a clamp and a microburner having a 19.05 mm (3/4 inch) yellow flame was used to contact the bottom edge of the foam sample for 3 seconds. The average vertical burn time (time from the withdrawal of the flame to flameout of the foam) for 5 samples was determined.

## IMPREGNATION PROCEDURE

Pop bottles were charged with the following materials:
100 mL distilled water
100 g polystyrene beads (ave. diameter ca. 1 mm; 220,000 molecular weight)
0.833 g hexabromocyclododecane
8.1 9 foaming agent[1]
2.0 g tricalcium phosphate (suspending agent)
0.10 g Tween®20[2] (surfactant)
1.3 mL 1% Nacconol[3] (auxiliary suspending agent)
0.015 g dibutyltin maleate[4] (acid scavenger)
0.10 g 2,6-di-tert-butyl-p-cresol[5] (anti-oxidant)
0.045 g polyethylene wax[6] (lubricant)
0.20 g $\alpha,\alpha'$bis(t-butyl-peroxy diisopropyl)benzene[7] (organic peroxide synergist)

The bottles were shaken, sealed, and placed in a bottle tumbler. The bottles were heated 2 hours at 90°C and then 2 hours at 125°C. After cooling the bottles to room temperature, the impregnated beads were collected by filtration, washed with 1N HCl, and tray dried. The amount of hexabromocyclododecane incorporated into the beads was determined by measuring the bromine content of the beads.

## DESCRIPTION OF HEXABROMOCYCLODODECANE SAMPLES EMPLOYED:

Average particle size was estimated by electron microscopy.

A: Micronized hexabromocyclododecane obtained from Great Lakes Chemical; m.p. 185-195°C; ave. particle size ca. 1 micron (large agglomerates of small particles present).

B: Micronized hexabromocyclododecane obtained from Great Lakes Chemical; m.p. 180-193°C; ave. particle size ca. 1 micron (large agglomerates of small particles present).

C: Micronized hexabromocyclododecane obtained from Great Lakes Chemical; m.p. 160-185°C; ave. particle size ca. 1 micron (large agglomerates of small particles present).

D: Micronized hexabromocyclododecane obtained from Great Lakes Chemical; m.p. 140-165°C; ave. particle size ca. 1 micron (large agglomerates of small particles present).

E: Hexabromocyclododecane obtained from Great Lakes Chemical; m.p. 185-195°C; wide range of particle sizes, including numerous particles over 100 microns in diameter.

[1] Examples 1-5, 8-12 used n-pentane; Examples 6-7, 13-16 used a mixture of 60% n-pentane, 24% isopentane, and 16% cyclopentane

[2] A polyoxyethylene derivative of sorbitan monolaurate, sold by ICI America

[3] A sodium linear alkyl benzene sulfonate, sold by Stepan Chemical Co.

[4] "Mark 645", sold by Argus

[5] Neville Chemical

[6] Allied 617A wax

[7] "Vulcup R", sold by Hercules

F: Hexabromocyclododecane obtained from Ethyl Corporation; m.p. 185-195°C; average particle size greater than 100 microns.

G: Micronized hexabromocyclododecane obtained from White Chemical; m.p. 180-185°C; average particle size ca. 1 micron.

H: Hexabromocyclododecane obtained from White Chemical; m.p. 180-185°C; average particle size greater than 100 microns

I: Micronized hexabromocyclododecane obtained from White Chemical; m.p. 183-190°C; average particle size ca. 1 micron.

J: Hexabromocyclododecane obtained from White Chemical; m.p. 185-190°C; average particle size greater than 100 microns.

RESULTS:

The degree of hexabromocyclododecane incorporation into the impregnated beads as well as the flame resistance of the foam discs are given in Table I. The use of micronized hexabromocyclododecane (Examples 1-4, 9, 11, 13, and 15) resulted in substantially greater incorporation of the flame retardant into the polystyrene beads than when coarser grades of hexabromocyclododecane were employed (Examples 5-8, 10, 12, 14, and 16). In addition, the foam discs containing beads prepared using micronized hexabromocyclododecane had much greater resistance to flame, as reflected in the shorter vertical burn times observed. For example, while only about 55% of the flame retardant was incorporated when a coarse grade of hexabromocyclododecane was used (Example 10), about 74% was incorporated using micronized hexabromocyclododecane having the same melting point range/isomer composition (Example 9). Even more surprisingly, the vertical burn time was about 8 times longer when the coarse hexabromocyclododecane was used.

TABLE I

| Example No. | Hexabromocyclododecane Sample | % Incorporation | Vertical Burn (sec.) |
|---|---|---|---|
| 1 | A | 77 | 1.3 |
| 2 | B | 77 | 1.3 |
| 3 | C | 80 | 2.4 |
| 4 | D | 82 | 2.6 |
| 5* | E | 61 | 3.1 |
| 6* | E | 53 | 7.5 |
| 7* | F | 50 | 9.4 |
| 8* | F | 48 | 10.1 |
| 9 | G | 74 | 1.7 |
| 10* | H | 55 | 13.0 |
| 11 | I | 79 | 1.4 |
| 12* | J | 35 | 11.6 |
| 13 | G | 80 | 4.0 |
| 14* | H | 56 | 8.4 |
| 15 | I | 84 | 3.7 |
| 16* | J | 39 | 16.0 |

*Comparative Example

Claims

1. A process for preparing fire-retardant expandable thermoplastic beads comprising
   (a) forming an aqueous suspension of 100 parts by weight vinyl aromatic polymer particles, from 50 to 500 parts by weight water, an effective amount of a suspending agent, from 0.1 to 2.5 parts by weight of hexabromocyclododecane having an average particle size of less than 25 microns, and from 3 to 20 parts by weight of a $C_4$-$C_6$ aliphatic hydrocarbon foaming agent;
   (b) heating the aqueous suspension at a temperature of from 40°C to 140°C for a period of from 0.5 to 15 hours to incorporate the hexabromocyclododecane and the foaming agent into the polymer particles and to form fire-retardant expandable thermoplastic beads; and
   (c) separating the beads from the water.

2. The process of claim 1 characterised in that the vinyl aromatic polymer particles are polystyrene particles.

3. The process of claim 1 or claim 2 characterised in that the suspending agent is tricalcium phosphate.

4. The process of any one of claims 1 to 3 characterised in that the C$_4$-C$_6$ aliphatic hydrocarbon foaming agent is a C$_5$ aliphatic hydrocarbon.

5. The process of any one of claims 1 to 4 characterised in that it comprises the additional steps after step (c) of washing and drying the separated beads.

6. The process of any one of claims 1 to 5 characterised in that the average diameter of the vinyl aromatic polymer particles is from 0.1 to 2.0 mm

7. The process of any one of claims 1 to 6 characterised in that from 0.01 to 1 part by weight of a nonionic surfactant and from 0.001 to 0.10 parts by weight of an anionic surfactant extender per 100 parts by weight of the vinyl aromatic polymer particles are also present in the aqueous suspension.

8. The process of any one of claims 1 to 7 characterised in that from 0.01 to 2.0 parts by weight of an organic peroxide synergist per 100 parts by weight vinyl aromatic polymer particles are also present in the aquueous suspension.

9. A process as claimed in claim 1 comprising
    (a) forming an aqueous suspension of 100 parts by weight polystyrene particles having an average diameter of from 0.1 to 2.0 mm, from 75 to 250 parts by weight water, from 0.1 to 5 parts by weight tricalcium phosphate suspending agent, from 0.001 to 0.10 parts by weight of a sodium linear alkylbenzene sulfonate extender, from 0.5 to 1.5 parts by weight of hexabromocyclododecane having an average particle size of less than 25 microns, from 0.01 to 2.0 parts by weight of an organic peroxide synergist, and from 5 to 12 parts by weight of a C$_5$ aliphatic hydrocarbon foaming agent;
    (b) heating the aqueous suspension at a temperature of from 80°C to 130°C for a period of from 1 to 5 hours to incorporate the hexabromocyclododecane and n-pentane into the polystyrene particles and to form fire-retardant expandable polystyrene beads;
    (c) separating the beads from the water;
    (d) washing the separated beads; and
    (e) drying the washed beads.

10. The process of claims 9 characterised in that the separated beads are washed with dilute hydrochloric acid in step (d).

11. The process of claim 9 or claim 10 characterised in that from 0.01 to 1 part by weight of a nonionic surfactant per 100 parts by weight polystyrene particles is also present in the aqueous suspension.

12. The process of claim 11 characterised in that the nonionic surfactant is a polyoxyalkylene sorbitan fatty acid ester.

13. The process of any one of claims 1 to 12 characterised in that the organic peroxide synergist is selected from $\alpha,\alpha'$-bis(t-butyl-peroxy diisopropyl)benzene and dicumyl peroxide.

**Patentansprüche**

1. Verfahren zur Herstellung flammhemmender, expandierbarer thermoplastischer Kügelchen, bei dem man
    (a) eine wäßrige Suspension aus 100 Gewichtsteilen vinylaromatischer Polymerteilchen, von 50 bis 500 Gewichtsteilen Wasser, einer wirksamen Menge Suspendiermittel, von 0,1 bis 2,5 Gewichtsteilen Hexabromcyclododecan mit einem mittleren Teilchendurchmesser unterhalb von 25 $\mu$m und 3 bis 20 Gewichtsteilen eines aliphatischen C$_4$-C$_6$-Kohlenwasserstoffs als Treibmittel bildet,
    (b) die wäßrige Suspension 0,5 bis 15 Stunden auf 40 bis 140 °C erhitzt, um das Hexabromcyclododecan und das Treibmittel in die Polymerteilchen zu inkorporieren und flammhemmende thermoplastische Kügelchen zu bilden, und
    (c) die Kügelchen vom Wasser abtrennt.

2. Verfahren gemäß Anspruch 1, dadurch gekennzeichnet, daß die vinylaromatischen Polymerteilchen Polystyrolteilchen sind.

3. Verfahren gemäß Anspruch 1 oder 2, dadurch gekennzeichnet, daß das Suspendiermittel Tricalciumphosphat ist.

4. Verfahren gemäß einem der Ansprüche 1 bis 3, dadurch gekennzeichnet, daß das Treibmittel aus aliphatischem $C_4$-$C_6$-Kohlenwasserstoff ein aliphatischer $C_5$-Kohlenwasserstoff ist.

5. Verfahren gemäß einem der Ansprüche 1 bis 4, dadurch gekennzeichnet, daß das Verfahren im Anschluß an Schritt (c) die zusätzlichen Schritte des Waschens und Trocknens der abgetrennten Kügelchen umfaßt.

6. Verfahren gemäß einem der Ansprüche 1 bis 5, dadurch gekennzeichnet, daß der mittlere Durchmesser der vinylaromatischen Polymerteilchen zwischen 0,1 und 2,0 mm liegt.

7. Verfahren gemäß einem der Ansprüche 1 bis 6, dadurch gekennzeichnet, daß in der wäßrigen Suspension außerdem 0,01 bis 1 Gewichtsteile eines nichtionischen oberflächenaktiven Mittels und von 0,001 bis 0,10 Gewichtsteile eines anionischen Oberflächenextenders auf 100 Gewichtsteile der vinylaromatischen Polymerteilchen vorhanden sind.

8. Verfahren gemäß einem der Ansprüche 1 bis 7, dadurch gekennzeichnet, daß in der wäßrigen Suspension außerdem 0,01 bis 2,0 Gewichtsteile eines organischen Peroxids als Synergisten auf 100 Gewichtsteile der vinylaromatischen Polymerteilchen vorhanden sind.

9. Verfahren gemäß Anspruch 1, bei dem man
(a) eine wäßrige Suspension aus 100 Gewichtsteilen Polystyrolteilchen mit einem mittleren Durchmesser von 0,1 bis 2,0 mm, 75 bis 250 Gewichtsteilen Wasser, 0,1 bis 5 Gewichtsteilen Tricalciumphosphat als Suspendiermittel, 0,001 bis 0,10 Gewichtsteilen des Natriumsalzes eines linearen Alkylbenzolsulfonates als Extender, 0,5 bis 1,5 Gewichtsteilen Hexabromcyclododecan mit einem mittleren Teilchendurchmesser unterhalb von 25 $\mu$m, 0,01 bis 2,0 Gewichtsteilen eines organischen Peroxids als Synergisten und 5 bis 12 Gewichtsteilen eines aliphatischen $C_5$-Kohlenwasserstoffs als Treibmittel bildet,
(b) die wäßrige Suspension 1 bis 5 Stunden auf 80 °C bis 130 ° erhitzt, um das Hexabromcyclododecan und n-Pentan in die Polystyrolteilchen zu inkorporieren und flammhemmende expandierbare Polystyrolkügelchen zu bilden,
(c) die Kügelchen vom Wasser abtrennt,
(d) die abgetrennten Kügelchen wäscht und
(e) die gewaschenen Kügelchen trocknet.

10. Verfahren gemäß Anspruch 9, dadurch gekennzeichnet, daß die abgetrennten Kügelchen in Schritt (d) mit verdünnter Salzsäure gewaschen werden.

11. Verfahren gemäß Anspruch 9 oder 10, dadurch gekennzeichnet, daß in der wäßrigen Suspension außerdem 0,01 bis 1 Gewichtsteile eines nichtionischen oberflächenaktiven Mittels auf 100 Gewichtsteile der Polystyrolteilchen vorhanden sind.

12. Verfahren gemäß Anspruch 11, dadurch gekennzeichnet, daß das nichtionische oberflächenaktive Mittel ein Polyoxyalkylensobitanfettsäureester ist.

13. Verfahren gemäß einem der Ansprüche 1 bis 12, dadurch gekennzeichnet, daß das organische Peroxid als Synergist aus $\alpha,\alpha'$-Bis-(t-butylperoxydiisopropyl)-benzol und Dikumylperoxid ausgewählt ist.

**Revendications**

1. Procédé pour la préparation de billes thermoplastiques expansibles ignifuges comprenant :
(a) la formation d'une suspension aqueuse de 100 parties en poids de particules de polymère vinyl aromatique, de 50 à 500 parties en poids d'eau, d'une quantité efficace d'un agent de suspension, de 0,1 à 2,5 parties en poids d'hexabromocyclododécane ayant une dimension particulaire moyenne inférieure à 25 $\mu$m, et de 3 à 20 parties en poids d'un agent moussant de type hydrocarbure aliphatique en $C_{4-6}$ ;

(b) le chauffage de la suspension aqueuse à une température de 40 °C à 140 °C pendant une période de 0,5 à 15 heures pour incorporer l'hexabromocyclododécane et l'agent moussant dans les particules de polymère et pour former des billes thermoplastiques expansibles ignifuges; et
(c) la séparation des billes et de l'eau.

2. Procédé suivant la revendication 1, caractérisé en ce que les particules de polymère vinyl aromatique sont des particules de polystyrène.

3. Procédé suivant les revendications 1 ou 2, caractérisé en ce que l'agent de suspension est du phosphate tricalcique.

4. Procédé suivant l'une quelconque des revendications 1 à 3, caractérisé en ce que l'agent moussant de type hydrocarbure aliphatique en $C_{4-6}$ est un hydrocarbure aliphatique en $C_5$.

5. Procédé suivant l'une quelconque des revendications 1 à 4, caractérisé en ce qu'il comprend après l'étape (c), les étapes supplémentaires de lavage et de séchage des billes séparées.

6. Procédé suivant l'une quelconque des revendications 1 à 5, caractérisé en ce que le diamètre moyen des particules de polymère vinyl aromatique est de 0,1 à 2,0 mm.

7. Procédé suivant l'une quelconque des revendications 1 à 6, caractérisé en ce qu'il y a aussi dans la suspension aqueuse, de 0,01 à 1 partie en poids d'un tensioactif non ionique et de 0,001 à 0,10 partie en poids d'un diluant de type tensioactif anionique pour 100 parties en poids des particules de polymère vinyl aromatique.

8. Procédé suivant l'une quelconque des revendications 1 à 7, caractérisé en ce qu'il y a aussi dans la suspension aqueuse, de 0,01 à 2,0 parties en poids d'un agent synergique de type peroxyde organique pour 100 parties en poids des particules de polymère vinyl aromatique.

9. Procédé suivant la revendication 1, comprenant :
(a) la formation d'une suspension aqueuse de 100 parties en poids de particules de polystyrène ayant un diamètre moyen de 0,1 à 2,0 mm, de 75 à 250 parties en poids d'eau, de 0,1 à 5 parties en poids de phosphate tricalcique comme agent de suspension, de 0,001 à 0,10 partie en poids d'un alkylbenzène sulfonate linéaire de sodium comme diluant, de 0,5 à 1,5 partie en poids d'hexabromocyclododécane ayant une dimension particulaire moyenne inférieure à 25 $\mu$m, de 0,01 à 2,0 parties en poids d'un agent synergique de type peroxyde organique, et de 5 à 12 parties en poids d'un agent moussant de type hydrocarbure aliphatique en $C_5$;
(b) le chauffage de la suspension aqueuse à une température de 80 °C à 130 °C pendant une période de 1 à 5 heures pour incorporer l'hexabromocyclododécane et le n-pentane dans les particules de polystyrène et pour former des billes de polystyrène expansibles ignifuges;
(c) la séparation des bilies et de l'eau;
(d) le lavage des billes séparées; et
(e) le séchage des billes lavées.

10. Procédé suivant la revendication 9, caractérisé en ce que les billes séparées sont lavées avec de l'acide chlorhydrique dilué dans l'étape (d).

11. Procédé suivant la revendication 9, caractérisé en ce qu'il y a aussi dans la suspension aqueuse, de 0,01 à 1 partie en poids d'un tensioactif nonionique pour 100 parties en poids de particules de polystyrène.

12. Procédé suivant la revendication 11, caractérisé en ce que le tensioactifnonionique est un ester d'acide gras de polyoxyalkylène sorbitane.

13. Procédé suivant l'une quelconque des revendications 1 à 12, caractérisé en ce que l'agent synergique de type peroxyde organique est choisi parmi l'$\alpha,\alpha'$-bis-(t-butyl-peroxy diisopropyl)-benzène et le peroxyde de dicumyle.